# EUROPÄISCHE PATENTSCHRIFT

(11) **EP 1 649 194 B1**
(45) Veröffentlichungstag und Bekanntmachung des Hinweises auf die Patenterteilung: **22.11.2006**
(21) Anmeldenummer: 04734828.9
(22) Anmeldetag: 26.05.2004
(51) Int. Cl.: F16H 7/20

(54) **ABDICHTUNG FÜR EIN WÄLZLAGER**
SEAL FOR AN ANTIFRICTION BEARING
SYSTEME D'ETANCHEITE POUR ROULEMENT

(30) Priorität: 24.07.2003 DE 10333673
(43) Veröffentlichungstag der Anmeldung: 26.04.2006
(73) Patentinhaber: Schaeffler KG, 91074 Herzogenaurach (DE)
(72) Erfinder: SCHMIDL, Matthias, 91074 Herzogenaurach (DE); RIEL, Christian, 92358 Seubersdorf (DE); STIEF, Hermann, 91448 Emskirchen (DE)
(86) Internationale Anmeldenummer: PCT/EP2004/005629
(87) Internationale Veröffentlichungsnummer: WO 2005/019696

(56) Entgegenhaltungen:
- EP-A- 0 241 810
- WO-A-02/48562
- FR-A- 2 751 392
- US-A- 5 234 385
- US-B1- 6 287 014
- PATENT ABSTRACTS OF JAPAN Bd. 1998, Nr. 05, 30. April 1998 (1998-04-30) & JP 10 019101 A (NTN CORP), 23. Januar 1998 (1998-01-23)

## Beschreibung

### Gebiet der Erfindung

Die vorliegende Erfindung bezieht sich auf eine Abdichtung für ein Wälzlager einer Spannrolle oder einer Umlenkrolle, die über ein Distanzstück lagepositioniert ist. Die Abdichtung umfasst eine Dichtkappe, die einen Ringspalt zwischen einem inneren Lagerring und einem äußeren Lagerring des Wälzlagers überdeckt. Die mit einem Lagerring umlaufende, zu den Wälzkörpern des Wälzlagers axial beabstandete Dichtkappe ist unter Einhaltung eines Dichtspaltes bis an das Distanzstück geführt.

### Hintergrund der Erfindung

Die Offenlegungsschrift DE 41 33 777 A1 zeigt den Aufbau einer Spannrolle für einen Zugmitteltrieb. Die wälzgelagerte Spannrolle umfasst einen inneren Lagerring, der auf einer Einstellbuchse in Verbindung einer Distanzscheibe angeordnet mittels eines separaten Befestigungsbolzens an dem Gehäuse, insbesondere dem Kurbelgehäuse einer Brennkraftmaschine, befestigt ist. Die bekannte Spannrolle zeigt keine Maßnahme, mit der das Distanzstück im vormontierten Zustand der Spannvorrichtung, verliergesichert mit der Spannvorrichtung verbunden werden kann. Für Fahrzeuge, die im Off-Road-Betrieb eingesetzt werden, verbunden mit Wasserdurchfahrten bzw. einem massivem Schmutzeintritt in den für die Brennkraftmaschine vorgesehenen Einbauraum, ist die bekannte Abdichtung ungeeignet.

Weiterhin ist es bekannt, Spannrollen zur Erzielung einer definierten Einbaulage mit einem Distanzstück zu versehen, an dem bevorzugt der Innenring des Wälzlagers lagepositioniert ist. Ein Befestigungsmittel, insbesondere eine Verschraubung ist dabei durch die Längsbohrung des Distanzstücks und des Lagerinnenrings geführt, um die Baueinheit, die Spannrolle sowie das Distanzstück beispielsweise an einer Brennkraftmaschine zu befestigen. Derartig verwendete Distanzstücke weisen einen Zentrieransatz zur Aufnahme des inneren Lagerrings auf sowie einen Flansch, der sich radial bis über die gesamte stirnseitige Wälzlagerkontur erstreckt. Außenseitig deckt der Flansch mit einem zylindrischen Kragen, einen Nabenbereich einer Laufscheibe ab, die drehstarr mit dem äußeren Lagerring des Wälzlagers befestigt ist. Dieser bekannte Aufbau erfordert eine Sicherung des Distanzstücks an der Spannrolle während der Montage, beispielsweise in Form einer separaten Sicherung, die jeweils nach erfolgter Montage der Spannrolle überflüssig ist.

Aus der WO 02/48562 A2 ist eine Spannrolle mit den Merkmalen des Oberbegriffes des Anspruches 1 bekannt.

### Zusammenfassung der Erfindung

Der Erfindung liegt die Aufgabe zu Grunde, eine einfache, kostengünstig montierbare Spannrolle zu realisieren, deren zugehöriges Distanzstück unverlierbar mit der Spannrolle verbunden ist.

Die zuvor genannte Aufgabenstellung wird durch die Merkmale von Anspruch 1 gelöst. Danach umfasst die erfindungsgemäße Spannrolle oder Umlenkrolle eine Dichtkappe, die mittelbar oder unmittelbar an dem äußeren Lagerring der Spannrolle form- und/oder kraftschlüssig lösbar befestigt ist. Weiterhin ist die Dichtkappe spielbehaftet, unter Bildung eines Dichtungslabyrinths mit dem Distanzstück verbunden ist. Erfindungsgemäß ermöglicht die Dichtkappe eine Baueinheit, bei der die Bauteile, die Spannrolle, das Distanzstück sowie die Dichtkappe unverlierbar miteinander verbunden sind. Damit kann die gesamte Baueinheit vorkomplettiert einer Montageeinrichtung zugeführt werden, die beispielsweise automatisiert die erfindungsgemäße Baueinheit an der Brennkraftmaschine befestigt. Die Erfindung verringert die Taktzeiten für die Montage und ermöglicht eine kostenoptimierte Montage.

Der Aufbau der erfindungsgemäßen Spannrolle oder Umlenkrolle sieht vor, dass diese ein das Wälzlager außen umschließende Laufscheibe umfasst, an der das Zugmittel des Zugmitteltriebs geführt ist. Das Wälzlager ist vorzugsweise formschlüssig auf einem Distanzstück zentriert, wobei mittels einer Verschraubung die aus den Bauteilen Spannrolle und Distanzstück bestehende Baueinheit beispielsweise an einem Gehäuse der Brennkraftmaschine lösbar befestigt ist.

Gemäß der Erfindung ist vorteilhaft vorgesehen, dass gegenüber dem bekannten Stand der Technik, der zuvor beschriebenen Baueinheit der Spannrolle, eine Dichtkappe zugeordnet ist. Die formschlüssig und/oder kraftschlüssig lösbar mittelbar oder unmittelbar an dem äußeren Lagerring des Wälzlagers lagefixierte Dichtlippe bildet weiterhin mit dem Distanzstück ein Dichtungslabyrinth. Dazu ist das Dichtungslabyrinth so gestaltet, dass eine verliergesicherte, spielbehaftete Anbindung des Distanzstücks an der Dichtkappe sichergestellt ist. Die Erfindung ermöglicht folglich eine Baueinheit, bei der alle Bauteile, die Spannrolle, das Distanzstück sowie die Dichtkappe unverlierbar zusammengefasst sind.

Vorteilhafte Aufgestaltungen der Erfindung sind Gegenstand der abhängigen Ansprüche 2 bis 18.

In vorteilhafter Weise umfasst die Spannrolle eine Kunststoff-Laufscheibe, die auch als Kunststoff-Pulley bezeichnet werden kann, die den äußeren Lagerring des Wälzlagers umschließt. Diese Maßnahme gewährleistet eine kostengünstige Herstellung der Laufscheibe mittels eines Kunststoff-Spritzgießverfahrens, wobei dieses Verfahren ein unmittelbares Umspritzen des äußeren Lagerrings ermöglicht.

Die Kunststoff-Laufscheibe, die vorteilhaft mit Versteifungsrippen versehen ist, besitzt eine ausreichende Steifigkeit und hat gegenüber einer Stahl-Laufscheibe einen Gewichtsvorteil. In vorteilhafter Weise ist die Kunststoff-Laufscheibe mit einem axial vorstehenden, geschlossen zylindrisch ausgebildeten Ansatz versehen.

In einer Einbaulage übergreift ein zylindrischer Schenkel der Dichtkappe den Ansatz der Laufscheibe. Einstückig mit dem zylindrischen Schenkel verbundene, vorteilhaft partiell radial nach innen gerichtete Nasen des Schenkels greifen zur Erzielung einer formschlüssigen Befestigung, in eine als umlaufende Ringnut gestaltete Schnapprillengeometrie des axial vorstehenden Ansatzes der Laufscheibe.

Die Dichtkappe gemäß der Erfindung ist vorteilhaft mit zumindest einer, vorteilhaft mit mehreren symmetrisch zueinander ausgerichteten Bohrungen oder Freistellungen im zylindrischen Schenkel der Dichtkappe versehen. Die Gestaltung bzw. Anordnung dieser Bohrungen erfolgt so, dass diese einen Austritt von Schmutzpartikeln oder Flüssigkeiten aus einem axial von dem Wälzlager und der Dichtkappe begrenzten Ringspalt austreten können. Der im Betriebszustand, d. h. bei umlaufender Spannrolle fliehkraftbedingte Austritt von Verunreinigungen kann dabei optimiert werden, indem die Kontur des axialen Ansatzes der Laufrolle abgeschrägt ist, um damit den Austritt der Verunreinigungen aus dem als Ringspalt gestalteten Zwischenraum zu optimieren.

Wünschenswert ist eine verdrehgesicherte Befestigung der Dichtkappe an der Laufscheibe der Spannrolle. Dazu bietet es sich gemäß der Erfindung an, die Dichtkappe mit einem axial ausgerichteten Vorsprung zu versehen, der in einer Einbaulage formschlüssig in eine stirnseitige Aussparung des axialen Ansatzes eingreift. Die Erfindung schleißt weiterhin alternative Lösungen ein, um eine wirksame Verdrehsicherung zwischen der Laufrolle und der Dichtkappe zu bewirken.

Eine erfindungsgemäße Ausgestaltung des Dichtungslabyrinths zwischen der Dichtkappe und dem Distanzstück sieht vor, dass der radiale Schenkel der Dichtkappe spielbehaftet in eine Ringnut des Distanzstücks eingreift. Das Eingreifen des Schenkels in die Ringnut ist konstruktiv so ausgelegt, dass sich ein Optimum hinsichtlich der Montage einerseits und der Abdichtwirkung andererseits einstellt. Dazu eignet sich insbesondere eine radiale Überdeckung von ≧ 0,5 mm zwischen der Innenkontur der Dichtkappe und der Wandungshöhe an dem Distanzstück im Bereich der Ringnut. Die radiale Überdeckung kann dabei durch die Werkstoffwahl der Dichtkappe sowie der konstruktiven Gestaltung beeinflusst werden, indem diese eine gewisse Elastizität aufweist. Damit stellt sich bei der Montage ein gewisses radiales Auslenken des radialen Schenkels der Dichtkappe ein, wobei dieser bei Erreichen der Ringnut in dem Distanzstück selbsttätig elastisch zurückweicht und spielbehaftet in die Ringnut eingreift. Zur Vereinfachung der Montage bzw. zur Vermeidung einer Beschädigung, insbesondere der Dichtkappe, weist diese im Bereich des radialen Schenkels vorteilhaft umfangsverteilt wandstärkenreduzierte Zonen auf. Diese Maßnahme, vorteilhaft kombiniert mit einer umlaufenden Fase, stirnseitig an der betreffenden Mantelfläche des Distanzstücks sowie innenseitig an dem radialen Schenkel der Dichtkappe, bewirken eine vereinfachte, zerstörungsfreie Montage der Dichtkappe.

Die Wirkung des Dichtlabyrinths verbessernd, ist die Ringnut in dem Distanzstück von Nutwandungen begrenzt, deren Höhe voneinander abweicht. Die dem Wälzlager abgewandte Ringnut übertrifft dabei die Höhe der gegenseitigen Ringnut, so dass sich insgesamt ein verlängerter Dichtspalt im Bereich des Dichtungslabyrinths einstellt. Dieses Konstruktionsprinzip verbessert entscheidend die Abdichtqualität und reduziert damit bei laufender Brennkraftmaschine den Eintritt von Verunreinigungen oder Flüssigkeiten über den Dichtspalt des Dichtungslabyrinths in den Innenraum zwischen Wälzlager und Dichtkappe.

Erfindungsgemäß schließt die Erfindung weiterhin die Gestaltung eines Distanzstücks ein, dessen radialer Schenkel in der Einbaulage spielbehaftet an einer Schulter zugeordnet ist, die sich zwischen dem Wälzlager und der Dichtkappe bildet. Diese Gestaltung eignet sich für eine Montage der Dichtkappe, nachdem das Wälzlager in Verbindung der Laufrolle auf einen Zentrierzapfen des Distanzstücks positioniert ist, bevor anschließend die Dichtkappe axial über das Distanzstück zugeführt an der Laufrolle befestigt werden kann.

Eine definierte Zuordnung der Bauteile, Wälzlager und Distanzstück wird vorteilhaft erreicht, indem das Distanzstück einen Zentrierbund oder einen Zentrierzapfen aufweist, auf dem der innere Lagerring des Wälzlagers aufgepresst ist. Diese Bauform gewährleistet eine für die Funktion des Zugmitteltriebs erforderliche winkelgerechte Ausrichtung des Wälzlagers in Verbindung mit der Laufrolle auf dem Distanzstück.

Als Maßnahme die Montage zu vereinfachen ist erfindungsgemäß außerdem vorgesehen, den zylindrischen Bord der Dichtkappe umfangsverteilt mit Einschnitten zu versehen, die sich begrenzt bis in den radialen Schenkel erstrecken. Bei der Montage kann sich der Bord damit zerstörungsfrei radial ausweichen.

Eine weitere vorteilhafte Ausgestaltung der Erfindung sieht vor, die Dichtkappe im Bereich des radialen Schenkels mit einer Kröpfung zu versehen. Dieses Merkmal ermöglicht zum einen einen definierten axialen Abstand des Dichtungslabyrinths zu dem Wälzlager. Weiterhin verbessert die Kröpfung die Elastizität der Dichtkappe, wodurch sich insbesondere die Montage der Dichtkappe in eine Ringnut des Distanzstücks vereinfacht.

Alternativ zu einer spielbehafteten Anordnung der Dichtkappe an dem Distanzstück im Bereich des Dichtlabyrinths, bietet sich erfindungsgemäß an, eine Dichtung vorzusehen, insbesondere einem Filzring. Dieser den Dichtspalt verkleinernde Filzring optimiert die Dichtwirkung, ohne eine nachteilige dauernde Berührung am Distanzstück. Damit wird die Dichtqualität verbessert, ohne gleichzeitig die mechanische Belastung des Wälzlagers aufgrund höherer Bauteiltemperaturen zu beeinflussen.

Alternativ zu einer Filzdichtung bzw. einem Filzring im Bereich des Dichtungslabyrinths, kann erfindungsgemäß ein Fettkragen innenseitig am radialen Schenkel der Dichtkappe vorgesehen werden. Hierzu eignet sich ein hochviskoses, zähflüssiges Fett, das dauerhaft an der Dichtkappe haftet und somit ebenfalls die Dichtwirkung unterstützt.

Die erfindungsgemäße Dichtkappe kann kostenoptimiert spanlos aus einem metallischen Werkstoff durch ein Tiefziehverfahren hergestellt werden. Alternativ dazu eignet sich eine Kunststoff-Dichtkappe, wozu sich insbesondere ein für große Stückzahlen kostengünstiges Spritzgießverfahren eignet.

### Kurze Beschreibung der Zeichnungen

In zwei Figuren sind Spannrollen in Verbindung mit unterschiedlich ausgebildeten erfindungsgemäßen Dichtkappen dargestellt. Es zeigen:
- Figur 1: eine Spannrolle in einem Halbschnitt, deren Dichtkappe mit einem Ansatz des Distanzstücks ein Dichtungslabyrinth bildet;
- Figur 2: eine Spannrolle, bei der die zugehörige Dichtkappe in eine Ringnut des Distanzstücks eingreift zur Bildung eines Dichtungslabyrinths;
- Figur 3: die Spannrolle gemäß Figur 2 in einem Längsschnitt.

### Detaillierte Beschreibung der Zeichnungen

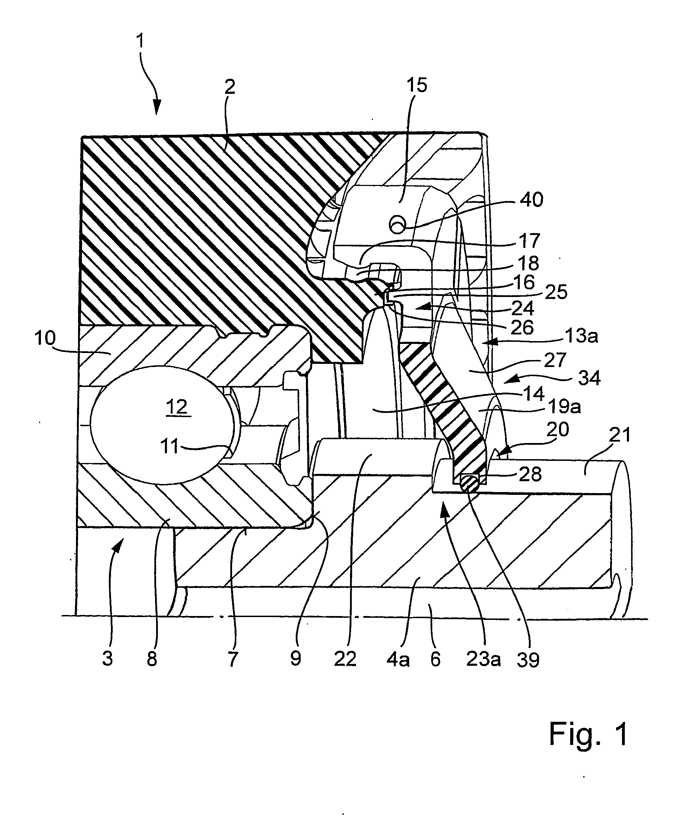

Die Figur 1 zeigt eine Spannrolle 1, deren Aufbau eine aus Kunststoff hergestellte Laufscheibe 2 umfasst, die über ein Wälzlager 3 drehbar gegenüber einem Distanzstück 4a angeordnet ist. Im Einbauzustand ist die Spannrolle 1 mittels einer durch eine Längsbohrung 6 des Distanzstücks 4a geführte und an dem Wälzlager 3 abgestützte Verschraubung 5 befestigt. Das Distanzstück 4a ist mit einem Zentrierbund 7 versehen, auf dem ein Innenring 8 des Wälzlagers 3 vorzugsweise mittels einer Presspassung positioniert ist und stirnseitig an einer Schulter 9 des Distanzstücks 4a abgestützt ist. Ein Außenring 10 des Wälzlagers 3 ist außenseitig von der Laufscheibe 2 umschlossen und damit formschlüssig verbunden. Zwischen den radial zueinander beabstandeten Innenring 8 und Außenring 19 des Wälzlagers 3 sind in einem Käfig 11 geführte Wälzkörper 12 angeordnet.

Die Spannrolle 1 verfügt weiterhin über eine Dichtkappe 13a, die einerseits einen sich zwischen dem Distanzstück 4a und der Laufscheibe 2 einstellenden Ringspalt 14 abdichtet und weiterhin eine verliergesicherte Anbindung des Distanzstücks 4a mit der Spannrolle 1 gewährleistet. Dazu ist die Dichtkappe 13a über einen zylindrischen Bord 15 an einem Ansatz 16 der Laufscheibe 2 lagepositioniert. Der zylindrische Bord 15 übergreift dabei den axial vorstehenden Ansatz 16 und ist dabei mittels partiell radial nach innen angeordneter Nasen 17 formschlüssig in eine Ringnut 18, die eine Schnapprollengeometrie darstellt, des Ansatzes 16 formschüssig verbunden. Mit einem radial nach innen gerichteten Schenkel 19a ist die Dichtkappe 13a unter Einhaltung eines Dichtspaltes 20 bis an eine Mantelfläche 21 des Distanzstücks 4a geführt. Das freie Ende des radialen Schenkels 19a ist weiterhin axial beabstandet zu einem radialen Ansatz 22 des Distanzstücks 4, so dass sich zwischen dem radialen Schenkel 19 und dem Distanzstück 4a ein Dichtungslabyrinth 23a einstellt.

Zwischen der Dichtkappe 13a und der Laufscheibe 2 ist weiterhin eine Verdrehsicherung 24 vorgesehen. Dazu greift ein axial ausgerichteter Vorsprung 25 der Dichtkappe 13a formschlüssig in eine entsprechend gestaltete Aussparung 26 des axial ausgerichteten Ansatzes 16 der Laufscheibe 2. Der radiale Schenkel 19a der Dichtkappe 13a umfasst weiterhin eine Kröpfung 27, mit der ein definierter Abstand zwischen dem Wälzlager 3 und der Dichtkappe 13a bestimmt werden kann. Weiterhin ermöglicht die Kröpfung 27 eine gewisse Elastizität, um die Montage der Dichtkappe 13a zu vereinfachen. Als Maßnahme, den Dichtspalt 21 zu verringern, bietet es sich an, innenseitig des radialen Schenkels 29 eine Ringnut 28 vorzusehen, zur Aufnahme eines Dichtungsrings. Dazu eignet sich vorteilhaft ein Filzring 39, der bis an die Mantelfläche 21 der Dichtkappe 13a geführt, nach einer Einlaufphase einen eng begrenzten Dichtspalt bildet. Die Dichtkäppe 13a ist im Bereich des zylindrischen Bords 15 außerdem mit zumindest einer Bohrung 40 versehen. Die Bohrung 40 hat die Aufgabe, dass im Ringspalt 14 eingetretene Verunreinigungen im Betriebszustand, d. h. bei rotierender Laufscheibe 2, bedingt durch die Zentrifugalkraft austreten können.

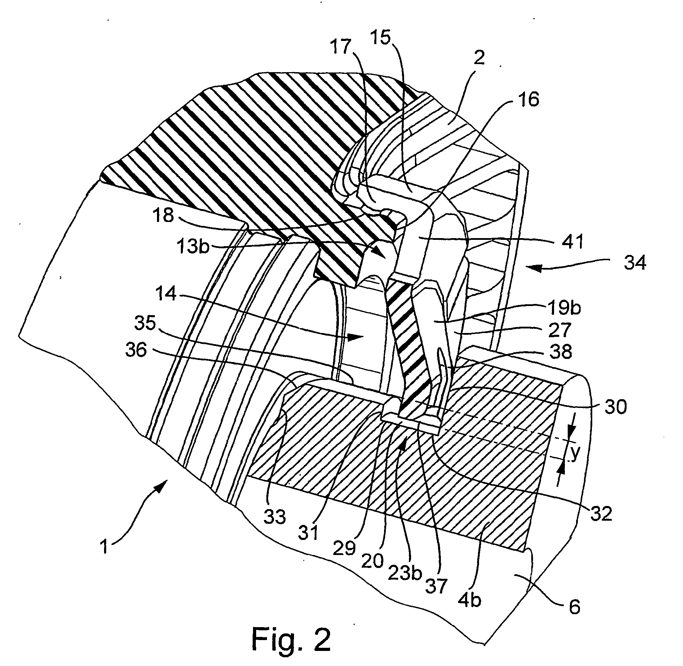

Die Figur 2 zeigt die Spannrolle 1 mit einem gemäß Figur 1 weitestgehend übereinstimmenden Aufbau. Nachfolgend sind alle Unterschiedsteils gegenüber der in Figur 1 abgebildeten Spannrolle 1 erläutert. Das Distanzstück 4b bildet eine Ringnut 29, in die das freie Ende des radialen Schenkels 19b der Dichtkappe 13b formschlüssig, spielbehaftet eingreift. Dazu ist das freie Ende des radialen Schenkels 19b in der Einbaulage jeweils axial beabstandet zu den Nutwandungen 30, 31 und einem Nutgrund 32 der Ringnut 29. Diese Anordnung bildet das Dichtungslabyrinth 23b. Die Figur 2 zeigt die Dichtkappe 13b in der Einbaulage, bei der sich eine radiale Überdeckung "Y" zwischen einer Innenkontur des radialen Schenkels 19b der Dichtkappe 13b und der Nutwandung 31 bzw. der sich daran anschließenden Mantelfläche 35 des Distanzstücks 4b einstellt. Durch die radiale Überdeckung "Y" in Verbindung mit der formschlüssigen Befestigung der Dichtkappe 13b an der Laufscheibe 2, wie in der Beschreibung zu Figur 1 erwähnt, stellt sich eine verliergesicherte Anordnung aller Bauteile der Spannrolle 1 ein, zur Bildung einer Baueinheit 34. Das Distanzstück 4b sowie die Dichtkappe 13b sind mit konstruktiven Maßnahmen versehen, um die Montage dieser Bauteile zu vereinfachen. Das Distanzstück 4b weist dazu stirnseitig in einer Übergangszone zwischen der Schulter 33 und einer Mantelfläche 35 eine umlaufende Außenfase 36 auf. Dazu angepasst ist der radiale Schenkel 19b des Distanzstücks 4a mit einer Innenfase 37 versehen, die gemeinsam die Montage der Bauteile Dichtkappe 13b und Distanzstück 4b vereinfachen.

Als weitere Maßnahme, die eine Montage vereinfacht, ist die Dichtkappe 13b im Bereich des radialen Schenkels 19b partiell mit radial von der Innenkontur ausgehend verlaufenden Zonen 38 versehen, die eine geringere Wandstärke aufweisen, wodurch sich bei der Montage der Dichtkappe 13b auf das Distanzstück 4b der radiale Schenkel 19b vereinfacht radial ausweichen kann und sich damit eine zerstörungsfreie Montage ergibt. Die wandstärkenreduzierte Zone 38 wirkt sich insbesondere in Verbindung mit der Kröpfung 27 im Bereich des radialen Schenkels 19b sich positiv aus um eine gewünschte Elastizität der Dichtkappe 13b zu erzielen, die erforderlich ist für eine zerstörungsfreie Montage. Alternativ zu unterschiedlichen Wandstärken eignen sich längenbegrenzte radiale Einschnitte im Bereich der Zone 38. Als weitere Montagevereinfachung ist die Dichtkappe 13b mit Einschnitten 41 versehen, die sich über die gesamte Länge des zylindrischen Bordes 15 erstrecken und bis in den Schenkel 19b reichen.

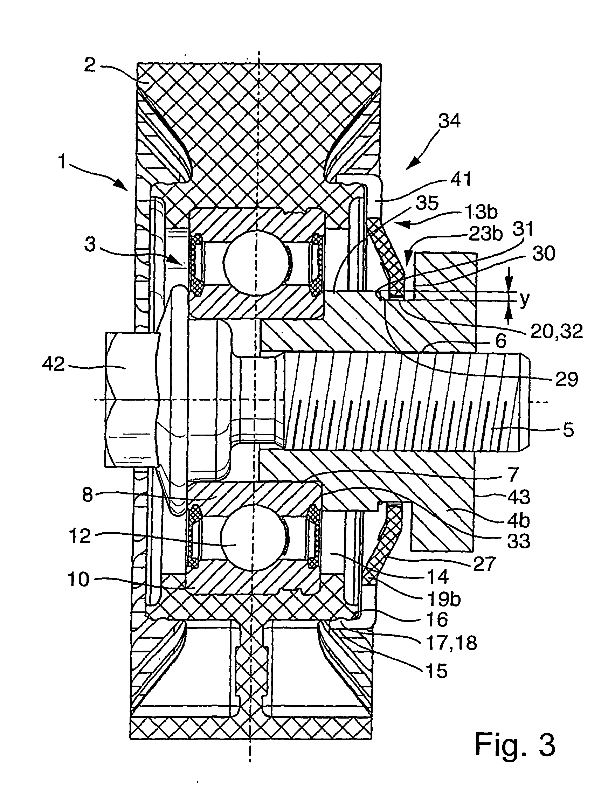

Die Figur 3 zeigt die Spannrolle 1 im Längsschnitt, die mit der Dichtkappe 13b sowie dem Distanzstück 4b gemeinsam die Baueinheit 34 bildet. Diese Darstellung beinhaltet außerdem eine Verschraubung 5, mit der die Baueinheit beispielsweise an einem Gehäuse einer in Figur 3 nicht dargestellten Brennkraftmaschine lösbar befestigt werden kann. Dazu ist die Verschraubung 5 in die Längsbohrung 6 des Distanzstücks 4b eingesetzt. Ein Schraubenkopf 42 stützt sich flächig an dem Innenring 8 des Wälzlagers 3 ab. In der Einbaulage bewirkt die Verschraubung 5 eine kraftschlüssige, verspannte Abstützung des Innenrings 8 an der Schulter 33 des Distanzstücks 4b, welches sich über eine Stirnseite 43 an der Brennkraftmaschine abstützt.

### Bezugszahlen

- 1: Spannrolle
- 2: Laufscheibe
- 3: Wälzlager
- 4a: Distanzstück
- 4b: Distanzstück
- 5: Verschraubung
- 6: Längsbohrung
- 7: Zentrierbund
- 8: Innenring
- 9: Schulter
- 10: Außenring
- 11: Käfig
- 12: Wälzkörper
- 13a: Dichtkappe
- 13b: Dichtkappe
- 14: Ringspalt
- 15: Bord
- 16: Ansatz
- 17: Nase
- 18: Ringnut
- 19a: Schenkel
- 19b: Schenkel
- 20: Dichtspalt
- 21: Mantelfläche
- 22: Ansatz
- 23a: Dichtungslabyrinth
- 23b: Dichtungslabyrinth
- 24: Verdrehsicherung
- 25: Vorsprung
- 26: Aussparung
- 27: Kröpfung
- 28: Ringnut
- 29: Ringnut
- 30: Nutwandung
- 31: Nutwandung
- 32: Nutgrund
- 33: Schulter
- 34: Baueinheit
- 35: Mantelfläche
- 36: Außenfase
- 37: Innenfase
- 38: Zone
- 39: Dichtring
- 40: Bohrung
- 41: Einschnitt
- 42: Schraubenkopf
- 43: Stirnseite

## Patentansprüche

1. Spannrolle oder Umlenkrolle für einen Zugmitteltrieb, umfassend ein Wälzlager (3), dessen Innenring (8) mittels eines Distanzstücks (4a, 4b) und einer Verschraubung (5) lagepositioniert ist und ein Zugmittel an einer einen Außenring (10) des Wälzlagers (3) umschließenden Laufscheibe (2) der Spannrolle (1) geführt ist, wobei das Wälzlager (3) zumindest einseitig eine axial beabstandete Dichtkappe (13a, 13b) einschließt, die einen Ringspalt (14) zwischen dem Innenring (8) und dem Außenring (10) übergreift, **dadurch gekennzeichnet, dass** die formschlüssig und/oder kraftschlüssig lösbar, mittelbar oder unmittelbar an dem Außenring (10) des Wälzlagers (3) lagefixierte Dichtkappe (13a, 13b) mit dem Distanzstück (4a, 4b) ein Dichtungslabyrinth (23a, 23b) bildet, und die Dichtkappe (13a, 13b) mit dem Distanzstück (4a, 4b) so verbunden sind, dass diese Bauteile mit der Spannrolle (1) unverlierbar zu einer Baueinheit (34) zusammengefasst sind.

2. Spannrolle nach Anspruch 1, wobei der Außenring (10) des Wälzlagers (3) von einer aus Kunststoff hergestellten Laufscheibe (2), einem Kunststoff-Pulley, umschlossen ist.

3. Spannrolle nach Anspruch 1, wobei die Laufscheibe (2) einen axial vorstehenden Ansatz (16) umfasst, der eine als Ringnut (18) ausgebildete Schnapprollengeometrie für die Dichtkappe (13a, 13b) bildet.

4. Spannrolle nach Anspruch 3, wobei die Dichtkappe (13a, 13b) in einer Einbaulage mit einem zylindrischen Bord (15) den axial vorstehenden Ansatz (16) der Laufscheibe (2) übergreift und mit zumindest partiell radial nach innen gerichteten Nasen (17) in die Ringnut (18) des Ansatzes (16) verrastet.

5. Spannrolle nach Anspruch 4, deren Dichtkappe (13a) im Bereich des zylindrischen Bordes (15) zumindest eine radial ausgerichtete Bohrung (40) oder Freistellung aufweist.

6. Spannrolle nach Anspruch 4, wobei zur Erzielung einer Verdrehsicherung (24), ein axial ausgerichteter Vorsprung (25) der Dichtkappe (13a) in eine stirnseitige Aussparung (26) des einstückig mit der Laufscheibe (2) verbundenen Ansatzes (16) eingreift.

7. Spannrolle nach Anspruch 1, wobei die Dichtkappe (13b) formschlüssig, spielbehaftet in eine Ringnut (29) des Distanzstücks (4b) eingreift, die axial versetzt zu einer Schulter (33) des Distanzstücks (4b) eingebracht ist, an dem der Innenring (8) des Wälzlagers (3) abgestützt ist.

8. Spannrolle nach Anspruch 7, wobei eine radiale Überdeckung "Y" von ≧ 0,5 mm zwischen einer Innenkontur des radialen Schenkels (19b) der Dichtkappe (13b) und einer Nutwandung (31) bzw. Mantelfläche (35) des Distanzstücks (4b) vorgesehen ist.

9. Spannrolle nach Anspruch 7, wobei der radiale Schenkel (19b) der Dichtkappe (13b) dem Dichtungslabyrinth (23b) zugeordnet, umfangsverteilt mit partiell angeordneten wandstärkereduzierten Zonen (38) versehen ist.

10. Spannrolle nach Anspruch 7, bei der die Ringnut (29) in dem Distanzstück (4b) von Nutwandungen (30, 31) begrenzt ist, deren Höhe voneinander abweicht.

11. Spannrolle nach Anspruch 1, bei der die Dichtkappe (13a) mit dem radialen Schenkel (19a) spielbehaftet einem radialen Ansatz (22) des Distanzstücks (4a) zugeordnet ist.

12. Spannrolle nach Anspruch 1, wobei das auf einem Zentrierbund (7) des Distanzstücks (4a) positionierte Wälzlager (3) an einer Schulter (9) abgestützt ist.

13. Spannrolle nach Anspruch 4, wobei der zylindrische Bord (15) der Dichtkappe (13b) umfangsverteilt Einschnitte (41) aufweist, die sich längenbegrenzt bis in den radialen Schenkel (19b) erstrecken.

14. Spannrolle nach Anspruch 1, bei dem der radiale Schenkel (19a, 19b) der Dichtkappe (13a, 13b) eine Kröpfung (27) aufweist, zur Erzielung eines definierten axialen Abstandes des Dichtungslabyrinths (23a, 23b) zu dem Wälzlager (3).

15. Spannrolle nach Anspruch 1, wobei der radiale Schenkel (19a) der Dichtkappe (13a) im Bereich des Dichtungslabyrinths (23a) einen Dichtring (39), insbesondere einen Filzring umfasst.

16. Spannrolle nach Anspruch 1, deren Dichtkappe (13a, 13b) im Bereich des Dichtungslabyrinths (23a, 23b) einen umlaufenden Fettkragen einschließt.

17. Spannrolle nach Anspruch 1, wobei die Dichtkappe (13a, 13b) spanlos, insbesondere mittels eines Tiefziehverfahrens aus einem metallischen Werkstoff hergestellt ist.

18. Spannrolle nach Anspruch 1, deren Dichtkappe (13a, 13b) aus einem elastischen Werkstoff, insbesondere einem Kunststoff hergestellt ist.

## Claims

1. Tensioning roller or return pulley for a flexible drive, comprising a roller bearing (3), the inner ring (8) of which is positioned by means of a spacer (4a, 4b) and a bolt (5), and a flexible drive element is carried on an idler sheave (2) of the tensioning roller (1) enclosing an outer ring (10) of the roller bearing (3), the roller bearing (3) enclosing, at least on one side, an axially spaced sealing cap (13a, 13b), which engages over an annular gap (14) between the inner ring (8) and the outer ring (10), **characterized in that** the sealing cap (13a, 13b), which is detachably fixed indirectly or directly to the outer ring (10) of the roller bearing (3) by a positively interlocking and/or non-positive connection, together with the spacer (4a, 4b) forms a labyrinth seal (23a, 23b), and the sealing cap (13a, 13b) is connected to the spacer (4a, 4b) so that these components with the tensioning roller (1) are captively combined into one basic unit (34).

2. Tensioning roller according to Claim 1, **characterized in that** the outer ring (10) of the roller bearing (3) is enclosed by an idler sheave (2) made from plastics, a plastic pulley.

3. Tensioning roller according to Claim 1, **characterized in that** the idler sheave (2) comprises an axially projecting step (16), which forms a snap roller geometry in the form of an annular groove (18) for the sealing cap (13a, 13b).

4. Tensioning roller according to Claim 3, **characterized in that** when fitted the sealing cap (13a, 13b) with a cylindrical rim (15) engages over the axially projecting step (16) of the idler sheave (2) and with lugs (17) at least in part directed radially inwards latches in the annular groove (18) in the step (16).

5. Tensioning roller according to Claim 4, **characterized in that** the sealing cap (13a) in the area of the cylindrical rim (15) has at least one radially aligned hole (40) or gap.

6. Tensioning roller according to Claim 4, **characterized in that** an axially aligned projection (25) of the sealing cap (13a) engages in an end recess (26) of the step (16), integrally connected to the idler sheave (2), in order to provide a rotational lock (24).

7. Tensioning roller according to Claim 1, **characterized in that** the sealing cap (13b) engages with a positive interlock and a certain amount of play in an annular groove (29) in the spacer (4b), the groove being inserted axially offset in relation to a shoulder (33) of the spacer (4b) on which the inner ring (8) of the roller bearing (3) is supported.

8. Tensioning roller according to Claim 7, **characterized in that** a radial overlap "Y" of ≥ 0.5 mm is provided between an inner contour of the radial flank (19b) of the sealing cap (13b) and a groove wall (31) or circumferential surface (35) of the spacer (4b).

9. Tensioning roller according to Claim 7, **characterized in that** the radial flank (19b) of the sealing cap (13b) assigned to the labyrinth seal (23b) is provided with zones (38) of reduced wall thickness distributed over parts of the circumference.

10. Tensioning roller according to Claim 7, **characterized in that** the annular groove (29) in the spacer (4b) is defined by groove walls (30, 31), which differ in their height.

11. Tensioning roller according to Claim 1, **characterized in that** the sealing cap (13a) with the radial flank (19a) is assigned with a certain amount of play to a radial step (22) of the spacer (4a).

12. Tensioning roller according to Claim 1, **characterized in that** the roller bearing (3) positioned on a centring flange (7) of the spacer (4a) is supported on a shoulder (9).

13. Tensioning roller according to Claim 4, **characterized in that** the cylindrical rim (15) of the sealing cap (13b) has indentations (41) distributed over the circumference, which are of limited length and extend into the radial flank (19b).

14. Tensioning roller according to Claim 1, **characterized in that** the radial flank (19a, 19b) of the sealing cap (13a, 13b) has an offset (27) in order to obtain a defined axial distance between the labyrinth seal (23a, 23b) and the roller bearing (3).

15. Tensioning roller according to Claim 1, **characterized in that** the radial flank (19a) of the sealing cap (13a) comprises a sealing ring (39), in particular a felt sealing ring, in the area of the labyrinth seal (23a).

16. Tensioning roller according to Claim 1, **characterized in that** the sealing cap (13a, 13b) encloses a circumferential grease collar in the area of the labyrinth seal (23a, 23b).

17. Tensioning roller according to Claim 1, **characterized in that** the sealing cap (13a, 13b) is manufactured from a metallic material by a chipless process, in particular by means of a deep-drawing process.

18. Tensioning roller according to Claim 1, **characterized in that** the sealing cap (13a, 13b) is made from an elastic material, in particular a plastic material.

## Revendications

1. Rouleau tendeur ou rouleau de déviation pour un entraînement par traction, comprenant un roulement (3), dont la bague intérieure (8) est positionnée au moyen d'une pièce d'écartement (4a, 4b) et d'un boulonnage (5) et un moyen de traction est guidé sur une poulie (2) du rouleau tendeur (1) entourant une bague extérieure (10) du roulement (3), dans lequel le roulement (3) comporte au moins d'un côté une coiffe d'étanchéité axialement espacée (13a, 13b), qui chevauche une fente annulaire (14) entre la bague intérieure (8) et la bague extérieure (10), **caractérisé en ce que** la coiffe d'étanchéité (13a, 13b) fixée en position, par complémentarité de forme et/ou de force, de façon démontable, directement ou indirectement sur la bague extérieure (10) du roulement (3), forme un joint d'étanchéité à labyrinthe (23a, 23b) avec la pièce d'écartement (4a, 4b), et la coiffe d'étanchéité (13a, 13b) est assemblée à la pièce d'écartement (4a, 4b) de telle façon que ces composants soient reliés au rouleau tendeur (1) de manière imperdable en une unité de construction (34).

2. Rouleau tendeur selon la revendication 1, dans lequel la bague extérieure (10) du roulement (3) est entourée d'une poulie (2) constituée de matière plastique, une poulie plastique.

3. Rouleau tendeur selon la revendication 1, dans lequel la poulie (2) comporte un épaulement (16) saillant axialement, qui forme un profil géométrique d'encliquetage en forme de rainure annulaire (18) pour la coiffe d'étanchéité (13a, 13b).

4. Rouleau tendeur selon la revendication 3, dans lequel la coiffe d'étanchéité (13a, 13b) chevauche, en position de montage, avec un bord cylindrique (15) l'épaulement saillant axialement (16) de la poulie (2) et se cale avec des ergots (17) dirigés au moins en partie radialement vers l'intérieur dans la rainure annulaire (18) de l'épaulement (16).

5. Rouleau tendeur selon la revendication 4, dont la coiffe d'étanchéité (13a) présente dans la région du bord cylindrique (15) au moins un alésage (40) ou un dégagement orienté radialement.

6. Rouleau tendeur selon la revendication 4, dans lequel une saillie orientée axialement (25) de la coiffe d'étanchéité (13a) s'engage dans un évidement frontal (26) de l'épaulement (16) assemblé en une seule pièce à la poulie (2), afin de réaliser une sécurité contre la rotation (24).

7. Rouleau tendeur selon la revendication 1, dans lequel la coiffe d'étanchéité (13b) s'engage en complémentarité de forme avec un jeu dans une rainure annulaire (29) de la pièce d'écartement (4b), qui est pratiquée avec un décalage axial par rapport à un épaulement (33) de la pièce d'écartement (4b), sur lequel la bague intérieure (8) du roulement (3) est appuyée.

8. Rouleau tendeur selon la revendication 7, dans lequel il est prévu un recouvrement radial "Y" de ≥ 0,5 mm entre un contour intérieur de la branche radiale (19b) de la coiffe d'étanchéité (13b) et une paroi de rainure (31) ou selon le cas une surface latérale (35) de la pièce d'écartement (4b).

9. Rouleau tendeur selon la revendication 7, dans lequel la branche radiale (19b) de la coiffe d'étanchéité (13b) est associée au joint à labyrinthe (23b), et est pourvue de zones (38) d'épaisseur réduite disposées partiellement réparties sur la périphérie.

10. Rouleau tendeur selon la revendication 7, dans lequel la rainure annulaire (29) est limitée dans la pièce d'écartement (4b) par des parois de rainure (30, 31), dont la hauteur varie d'une à l'autre.

11. Rouleau tendeur selon la revendication 1, dans lequel la coiffe d'étanchéité (13a) est associée par sa branche radiale (19a) avec un jeu à l'épaulement radial (22) de la pièce d'écartement (4a).

12. Rouleau tendeur selon la revendication 1, dans lequel le roulement (3) positionné sur un rebord de centrage (7) de la pièce d'écartement (4a) est appuyé sur un épaulement (9).

13. Rouleau tendeur selon la revendication 4, dans lequel le bord cylindrique (15) de la coiffe d'étanchéité (13b) comporte des encoches (41) réparties en périphérie, qui s'étendent avec une longueur limitée jusque dans la branche radiale (19b).

14. Rouleau tendeur selon la revendication 1, dans lequel la branche radiale (19a, 19b) de la coiffe d'étanchéité (13a, 13b) présente un double coude (27), pour produire une distance axiale définie entre le joint à labyrinthe (23a, 23b) et le roulement (3).

15. Rouleau tendeur selon la revendication 1, dans lequel la branche radiale (19a) de la coiffe d'étanchéité (13a) comporte, dans la région du joint à labyrinthe (23a), un joint torique (39), en particulier un joint de feutre.

16. Rouleau tendeur selon la revendication 1, dont la coiffe d'étanchéité (13a, 13b) comporte un col de graisse périphérique dans la région du joint à labyrinthe (23a, 23b).

17. Rouleau tendeur selon la revendication 1, dans lequel la coiffe d'étanchéité (13a, 13b) est fabriquée sans enlèvement de copeaux, en particulier par emboutissage à partir d'un matériau métallique.

18. Rouleau tendeur selon la revendication 1, dont la coiffe d'étanchéité (13a, 13b) est fabriquée en un matériau élastique, en particulier une matière plastique.
